(19) Europäisches Patentamt
European Patent Office
Office européen des brevets

(11) **EP 3 054 440 A1**

(12) **EUROPEAN PATENT APPLICATION**

(43) Date of publication:
**10.08.2016 Bulletin 2016/32**

(51) Int Cl.:
**G09G 3/14** (2006.01)     **H05B 33/08** (2006.01)

(21) Application number: **15185182.1**

(22) Date of filing: **15.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **03.02.2015  TW 104201725 U**

(71) Applicant: **Compal Broadband Networks Inc.
114 Taipei City (TW)**

(72) Inventors:
• **Yu, Hui-Ming
  Hsinchu County 302 (TW)**
• **Wang, Jan-Yi
  Hsinchu County 302 (TW)**
• **Lee, Lung-An
  Hsinchu County 302 (TW)**

(74) Representative: **Becker Kurig Straus
Patentanwälte
Bavariastrasse 7
80336 München (DE)**

(54) **ADJUSTMENT CIRCUIT FOR DISPLAY MODULE**

(57)    An adjustment circuit for a display module to process a phase brightness adjustment operation is disclosed. The adjustment circuit includes a power source; a control module coupled to the power source for generating a control signal; and a driving module coupled to the display module and the control module for generating an adjustment current according to the control signal, so as to process the phase brightness adjustment operation according to the adjustment current passing through the display module; wherein the adjustment current corresponds to a plurality of adjustment resistance values of the driving module.

FIG. 1

**Description**

Field of the Invention

The application relates to an adjustment circuit for a display module, and more particularly, to an adjustment circuit which adaptively adjusts a current passing through a display module for processing a phase brightness adjustment operation of the display module.

Background of the Invention

Conventionally, a display unit, e.g. a lighting emitting diode bulb, can utilize a pulse width modulation (PWM) module to generate an adjustable light source. The PWM module is operated to generate a PWM current for providing an adjustable average current to conduct the display unit, so as to comply with requirements of different brightness of the light source. However, the PWM module is a complex circuit corresponding to an expensive cost, and an accurate estimation of the duty cycle is required for adjusting the adjustable current with more sophisticated circuit designs.

Under such circumstances, although an electronic product comprising the PWM module can generate the adjustable current, the cost of the electronic product is too expensive or the electronic product must be operate in a severe environment, e.g. a high temperature and extreme humid condition, such that it is not reasonable to utilize a high-cost PWM module for driving the driving unit with such the severe environment, which violates the basic economic principle. Therefore, it is necessary to provide a practicable adjustment circuit with low-cost and durable characteristics for adaptively driving the driving unit.

Summary of the Invention

This in mind, the application aims at providing an adjustment circuit for a driving module to solve the above mentioned problems.

This is achieved by an adjustment circuit for a driving module according to claim 1. The dependent claims pertain to corresponding further developments and improvements.

As will be seen more clearly from the detailed description following below, the claimed adjustment circuit for a display module to process a phase brightness adjustment operation is disclosed. The adjustment circuit comprises a power source; a control module, coupled to the power source, for generating a control signal; and a driving module, coupled to the display module and the control module, for generating an adjustment current according to the control signal, so as to process the phase brightness adjustment operation according to the adjustment current passing through the display module; wherein the adjustment current corresponds to a plurality of adjustment resistance values of the driving module.

Brief Description of the Drawings

In the following, the invention is further illustrated by way of example, taking reference to the accompanying drawings thereof:

FIG. 1 illustrates a schematic diagram of an adjustment circuit according to an embodiment of the present invention.
FIG. 2 illustrates a schematic diagram of a driving module according to an embodiment of the invention.
FIG. 3 illustrates a schematic diagram of a control module according to an embodiment of the invention.
FIG. 4 illustrates a schematic diagram of another adjustment circuit according to an embodiment of the invention.

Detailed Description

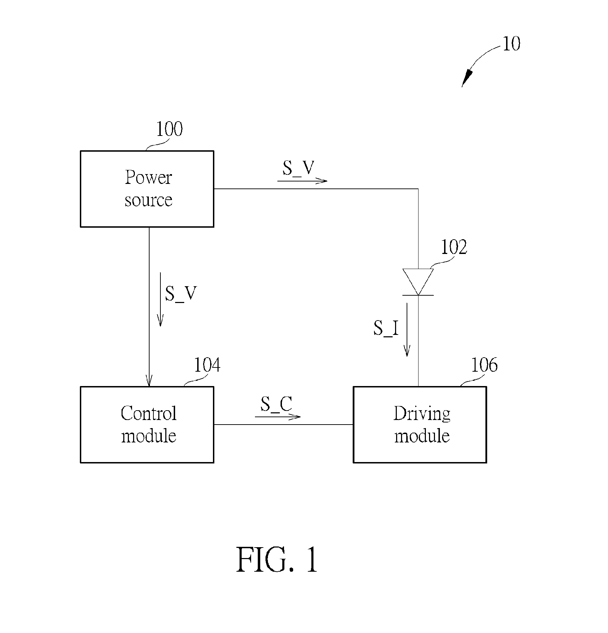

Please refer to FIG. 1, which illustrates a schematic diagram of an adjustment circuit 10 according to an embodiment of the present invention. As shown in FIG. 1, the adjustment circuit 10 comprises a power source 100, a display module 102, a control module 104 and a driving module 106. In the embodiment, the power source 100 is coupled to the display module 102 and the control module 104, and generates a voltage source signal S_V to be transmitted to the display module 102 and the control module 104. The control module 104 is couple to the driving module 106, and generates a control signal S_C to be transmitted to the driving module 106. Accordingly, the driving module 106 can generate an adjustment current S_I according to the control signal S_C for conducting the display module 102, such that the display module 102 can process a phase brightness adjustment operation to generate different brightness of the light source. Noticeably, the display module 102 of the embodiment is realized as a light emitting diode, and certainly, the display module 102 can be realized as different types of light generator in other embodiments, which is not limiting the scope of the invention.

Besides, the phase brightness adjustment operation comprises a plurality of adjustment phases, and the driving module 106 can correspondingly output a plurality of adjustment resistance values. Accordingly, during operating each phase, the driving module 106 can correspondingly output one of the plurality of adjustment resistance values according to the control signal S_C, and the power source 100 coupled to the driving module 106 can comply with the Ohm Law to generate the adjustment current S_I according to the outputted adjustment resistance value, such that the display module 102 can utilize the adjustment current S_I to generate the brightness. Since the plurality of adjustment phases can correspond to different brightness, the embodiment of the present invention can adaptively utilize/choose the control signal S_C and the driving module 106 to have the display module 102 output one specific output brightness. In comparison with the prior art which must utilize the PWM module for generating the adjustable current to drive the display module, the embodiment of the present invention can avoid the utilization of complex circuit designs of the adjustment circuit 10 to efficiently lower the production cost thereof and enlarger the application range of the adjustment circuit 10 and the display module 102.

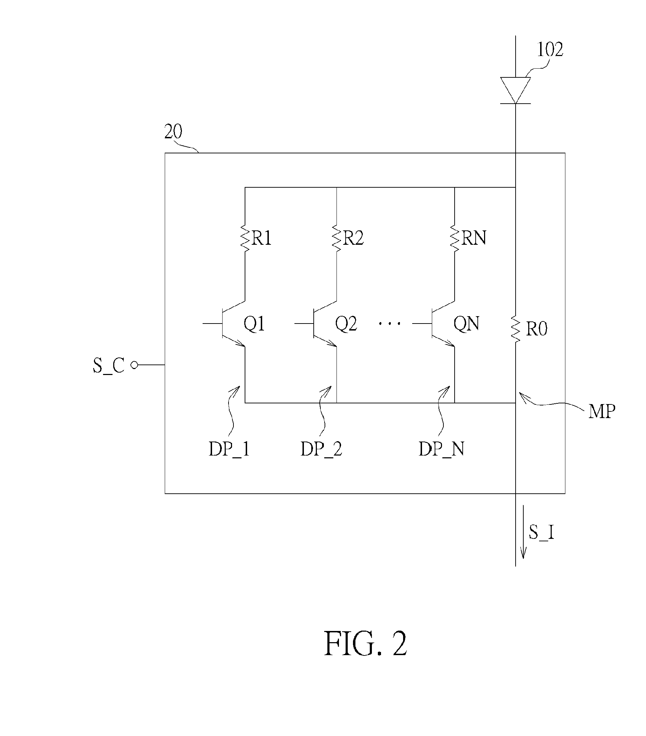

Please refer to FIG. 2, which illustrates a schematic diagram of a driving module 20 according to an embodiment of the invention. As shown in FIG. 2, the driving module 20 of the embodiment comprises a main circuit MP and a plurality of dependent circuits DP_1-P_N. Preferably, the main circuit MP and the plurality of dependent circuits DP_1-DP_N are connected in parallel. The main circuit MP comprises a main resistance module R0 (e.g. a resistor). Each of the dependent circuits DP_1-DP_N comprises a dependent resistance module (e.g. a resistor) and a switch module (e.g. a transistor switch unit), and the dependent resistance modules and the switch modules are connected in series, i. e. the dependent circuit DP_1 comprises the dependent resistance module R1 being coupled to the switch module Q1 in series, the dependent circuit DP_2 comprises the dependent resistance module R2 being coupled to the switch module Q2 in series, and the dependent circuit DP_N comprises the dependent resistance module RN being coupled to the switch module QN in series, and so on. Accordingly, the switch modules Q1-QN of the dependent circuits DP_1-DP_N are turned on or off according to the reception of the control signal S_C, to correspondingly determine conduction results of the dependent circuits DP_1-DP_N. When at least one of the dependent circuits DP_1-DP_N is conducted, the dependent resistance module of the at least one conducted dependent circuit is coupled to the main resistance module R0 in parallel to generate one of the plurality of adjustment resistance values of the driving module 20.

For example, when the control signal S_C determines that the dependent circuit DP_1 is conducted and the dependent circuits DP_2-DP_N are not conducted, the main resistance module R0 of the main circuit MP is coupled to the dependent resistance module R1 of the dependent circuit DP_1 in parallel, such that the driving module 20 can output the current adjustment resistance value, i.e. a parallel resistance value of R0 and R1 as $\dfrac{R0 \times R1}{R0 + R1}$. When the control signal S_C determines that all the dependent circuits DP_1-DP_N are conducted, the main resistance module R0 of the main circuit MP is coupled to the dependent resistance modules R1-RN of the dependent circuits DP_1-DP_N in parallel, such that the driving module 20 can output the current adjustment resistance value, i.e. a parallel resistance value of R0-RN as $\dfrac{1}{\dfrac{1}{R0} + \dfrac{1}{R1} + \cdots \dfrac{1}{RN}}$. When the control signal S_C determines that all the dependent circuits DP_1-DP_N are not conducted, the main resistance module R0 of the main circuit MP is not coupled to the dependent resistance modules R1-RN of the dependent circuits DP_1-DP_N in parallel, such that the driving module 20 can output the current adjustment resistance value, i.e. the resistance value R0.

Certainly, according to different application requirements of the adjustment circuit 10 and the display module 102, the embodiment of the present invention can adaptively choose the adjustment resistance values of the main resistance module R0 and the dependent resistance modules R1-RN, such that a larger adjustment resistance value, which corresponds to a smaller adjustment current before being connected in parallel, can be adaptively adjusted to become another smaller adjustment resistance value, which corresponds to a larger adjustment current after being connected in parallel. Alternatively, different combinations can be formed to connect one or many of dependent resistance module(s) with the main resistance module in parallel, so as to generate different adjustment resistance values corresponding to many specific operational currents of the display module 102, such that the display module 102 can be operated to generate different brightness degrees of the light source, which is also within the scope of the invention.

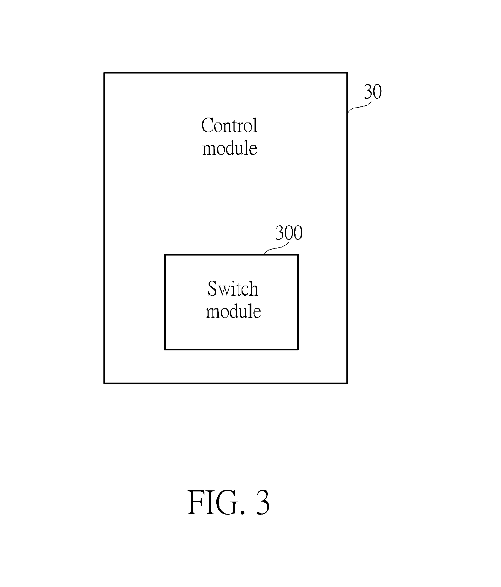

Please refer to FIG. 3, which illustrates a schematic diagram of a control module 30 according to an embodiment of the invention. As shown in FIG. 3, the control module 30 of the embodiment comprises a switch module 300, such that a user can utilize the switch module 300 to generate an initiation signal to be transmitted to the driving module 20, so as to determine whether the driving module 106 (or the driving module 20) is operated to process the phase brightness adjustment operation. Preferably, the switch module 300 of the embodiment can be realized as a pressing button. After the user presses the pressing button, the adjustment circuit 10 can process the resistance selection operation of the control module 30 and the driving module 106 (or the riving module 20), so as to operate the phase brightness adjustment operation for the display module 102.

Additionally, in another embodiment, the switch module 300 can receive the adjustment current passing through the display module 102 as a feedback value, to determine whether the adjustment current utilized by the display module 102 is within a safe operational range, so as to process a protection operation of the phase brightness adjustment operation. When the driving module 106 (or the driving module 20) outputs a too small adjustment resistance value, the switch module 300 can correspondingly generate a termination signal to stop related operations of the driving module 106 (or the driving module 20), so as to avoid the generation of a large adjustment current to burn down the display module 102, which is also within the scope of the invention.

Besides, the phase brightness adjustment operation is utilized in an electronic product to correspond to a plurality of operational modes of the electronic product. Also, the plurality of operational modes of the embodiment comprise a normal operational mode, a standby mode and a sleeping mode, and correspond to a plurality of outputting brightness of the phase brightness adjustment operation.

For example, the electronic product of the embodiment can be realized as a multimedia player system, and the adjustment circuit 10 and the display module 102 can be adaptively installed in a display panel of the multimedia player system. Accordingly, when the multimedia player system is initiated by the user, the display module 102 is operated to output from a 0% outputting brightness (corresponding to a sleeping mode of the multimedia player system) to a 100% outputting brightness (corresponding to a normal operational mode), so as to inform the user that the multimedia player system is correctly turned on. When the multimedia player system is playing a multimedia data, the display module 102 can maintain to output the 100% outputting brightness, so as to inform the user that the multimedia player system is being operated a broadcasting operation. When the user has initiated the multimedia player system but does not process the broadcasting operation over a predetermined period, the display module 102 can adjust from the 100% outputting brightness to a 50% outputting brightness, to inform the user that the multimedia player system has been initiated to wait for an input command from the user. Under such circumstances, the multimedia player system can show the 50% outputting brightness to represent that the multimedia player system has entered a power-saving mode.

Noticeably, the adjustment circuit 10 and the display module 102 of the embodiment can refer to one or many operational modes of the electronic product for correspondingly outputting many adjustment resistance values. Also, the user can observe the outputting brightness of the display module 102 to tell which one of the operational modes of the electronic product is currently operated. Since the operational modes and the number thereof in different electronic products may be different, other embodiments can also adaptively modify or change the number of the dependent circuits to be coupled to the main circuit in parallel, to correspondingly have different number of the adjustment resistance value to be outputted by the driving module 106 (or the driving module 20), so as to reduce unnecessary circuit designs of the driving module 20 for lowering the cost of the driving module 20, which is also within the scope of the invention.

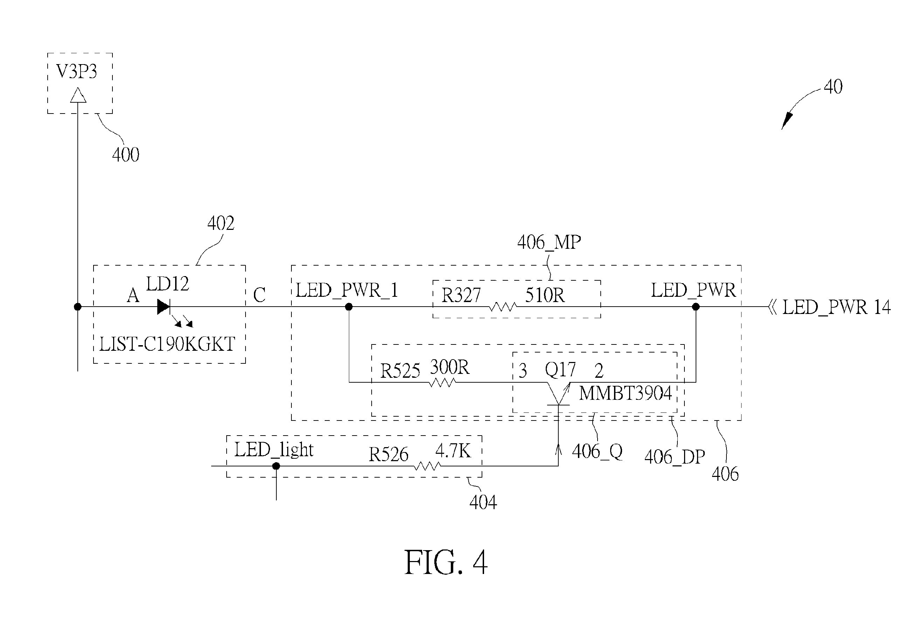

Please refer to FIG. 4, which illustrates a schematic diagram of another adjustment circuit 40 according to an embodiment of the invention. As shown in FIG. 4, the adjustment circuit 30 comprises a power source 400, a display module 402, a control module 404 and a driving module 406. Preferably, the driving module 406 of the embodiment only comprises one dependent circuit 406_DP to be coupled to the main circuit 406_MP in parallel. Accordingly, referring to a conduction of a switch module 406_Q, the driving module 406 can correspondingly generate two adjustment resistance values, which correspond to two adjustment currents passing through the display module 402, to have the phase brightness adjustment operation output two outputting brightness with different user's selections. For example, the main resistance module R327 of the main circuit 406_MP corresponds to a first adjustment resistance value, and the main resistance module R327 of the main circuit 406_MP being coupled to the dependent resistance module R525 of the dependent circuit 406_DP in parallel corresponds to a second adjustment resistance value. According to the control signal generated by the user, the driving module 406 can be switched between the first adjustment resistance value or the second adjustment resistance value, such that the display module 402 can generate different outputting brightness according to different conduction currents, and display the operational mode of the electronic product via the conduction current. Certainly, those skilled in the art can further combine the adjustment circuit with the display module, to cooperate with other display interfaces or touch control interfaces, so as to provide convenient operations for different users/requirements, which is also within the scope of the invention.

Preferably, the embodiment of the present invention teaches different realization of the adjustment circuit for driving the display module, to prevent the utilization of the PWM module in the prior art and to simplify the circuit designs for driving the display module, so as to effectively lower the cost and to elevate the life span of the adjustment circuit/display module. The utilization number of the composition elements/units in the mentioned embodiments is for demonstration, which is not limiting the scope of the invention.

To sum up, the present invention provides an adjustment circuit to adaptively adjust a current passing through a display module, so as to process the phase brightness adjustment operation for the display module, such that a plurality of outputting brightness can be correspondingly outputted to represent a plurality of operational modes of the electronic product. In comparison with the prior art which utilizes the PWM module having complex circuit designs with high cost, the embodiment of the present invention utilizes the control signal to adaptively switch between a plurality of adjustment resistance values of the driving module without utilizing the PWM module, so as to process the phase brightness adjustment operation of the display module, such that the cost of the embodiments can be effectively reduce and the application range as well as the life span of the display module equipped inside the electronic production can be efficiently improved.

**Claims**

1. An adjustment circuit (10) for a display module (102) to process a phase brightness adjustment operation, **characterized by** comprising:

    a power source (100);
    a control module (104), coupled to the power source (100), for generating a control signal (S_C); and
    a driving module (106), coupled to the display module (102) and the control module (104), for generating an adjustment current (S_I) according to the control signal (S_C), so as to process the phase brightness adjustment operation according to the adjustment current (S_I) passing through the display module (102);
    wherein the adjustment current (S_I) corresponds to a plurality of adjustment resistance values of the driving module (106).

2. The adjustment circuit of claim 1, **characterized in that** the phase brightness adjustment operation comprises a plurality of adjustment phases corresponding to a plurality of outputting brightness of the display module (102).

3. The adjustment circuit of claim 1, **characterized in that** the driving module (106) further comprises:

    a main circuit (MP), comprising a main resistance module (R0); and
    a plurality of dependent circuits (DP_1-DP_N), coupled to the main circuit (MP) in parallel, each dependent circuit comprises a dependent resistance module coupled to a switch module in series;
    wherein a plurality of switch modules (Q1-QN) of the plurality of dependent circuits (DP_1-DP_N) determine conduction results according to the control signal (S_C), and when at least one of the dependent circuits is conducted, the dependent resistance module of the at least one conducted dependent circuit is coupled to the main resistance module (R0) of the main circuit (MP) in parallel to generate one of the plurality of adjustment resistance values.

4. The adjustment circuit of claim 1, **characterized in that** the control module (104) further comprises a switch module (300), for determining whether the driving module (106) processes the phase brightness adjustment operation.

5. The adjustment circuit of claim 1, **characterized in that** the phase brightness adjustment operation is utilized in an electronic product to correspond to a plurality of operational modes of the electronic product.

6. The adjustment circuit of claim 5, **characterized in that** the plurality of operational modes comprise a normal operational mode, a standby mode and a sleeping mode, and correspond to a plurality of outputting brightness of the phase brightness adjustment operation.

10

100

Power
source

S_V

102

S_V

S_I

104

Control
module

S_C

106

Driving
module

FIG. 1

FIG. 2

Control
module

30

300

Switch
module

FIG. 3

FIG. 4

EP 3 054 440 A1

Europäisches
Patentamt

European
Patent Office

Office européen
des brevets

**EUROPEAN SEARCH REPORT**

Application Number

EP 15 18 5182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/013854 A1 (OGORO KAZUO [JP]) 16 August 2001 (2001-08-16) * paragraphs [0002], [0009], [0035] - [0041]; figures 2,3,4 * | 1-6 | INV. G09G3/14 H05B33/08 |
| X | JP 2014 166725 A (KONICA MINOLTA INC) 11 September 2014 (2014-09-11) * paragraphs [0029], [0044], [0048] - [0050], [0070] - [0072]; figures 4,7,8 * | 1-6 | |
| A | US 2013/057163 A1 (SUTARDJA SEHAT [US] ET AL) 7 March 2013 (2013-03-07) * paragraph [0065]; figure 8 * | 1-6 | |
| A | EP 1 091 339 A2 (HARNESS SYST TECH RES LTD [JP]; SUMITOMO WIRING SYSTEMS [JP]; SUMITOMO) 11 April 2001 (2001-04-11) * paragraphs [0036] - [0051]; figure 1 * | 1-6 | |

TECHNICAL FIELDS
SEARCHED (IPC)

G09G
H05B

The present search report has been drawn up for all claims

| Place of search | Date of completion of the search | Examiner |
|---|---|---|
| The Hague | 1 April 2016 | Ladiray, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 5182

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2016

| Patent document cited in search report | | Publication date | Patent family member(s) | | | Publication date |
|---|---|---|---|---|---|---|
| US 2001013854 | A1 | 16-08-2001 | CN | 1316847 | A | 10-10-2001 |
| | | | GB | 2365691 | A | 20-02-2002 |
| | | | JP | 3438693 | B2 | 18-08-2003 |
| | | | JP | 2001215914 | A | 10-08-2001 |
| | | | US | 2001013854 | A1 | 16-08-2001 |
| JP 2014166725 | A | 11-09-2014 | NONE | | | |
| US 2013057163 | A1 | 07-03-2013 | US | 2013057163 | A1 | 07-03-2013 |
| | | | WO | 2013028632 | A1 | 28-02-2013 |
| EP 1091339 | A2 | 11-04-2001 | EP | 1091339 | A2 | 11-04-2001 |
| | | | JP | 2001110565 | A | 20-04-2001 |
| | | | US | 6496168 | B1 | 17-12-2002 |

EPO FORM P0459

For more details about this annex : see Official Journal of the European Patent Office, No. 12/82